# EUROPÄISCHE PATENTSCHRIFT

(11) **EP 0 798 470 B1**
(45) Veröffentlichungstag und Bekanntmachung des Hinweises auf die Patenterteilung: **07.05.2003**
(21) Anmeldenummer: 97102601.8
(22) Anmeldetag: 18.02.1997
(51) Int. Cl.: F15B 11/02, G05D 16/10

(54) **Elektrohydraulische Steuervorrichtung**
Electro-hydraulic control system
Dispositif de commande électrohydraulique

(30) Priorität: 29.03.1996 DE 29605911 U
(43) Veröffentlichungstag der Anmeldung: 01.10.1997
(73) Patentinhaber: HEILMEIER & WEINLEIN Fabrik für Oel-Hydraulik GmbH & Co. KG, 81673 München (DE)
(72) Erfinder: Brunner, Rudolf, 85598 Baldham (DE); Neumair, Georg, Dipl.-Ing. (FH), 85402 Thalhausen (DE)
(74) Vertreter: Grünecker, Kinkeldey, Stockmair & Schwanhäusser Anwaltssozietät

(56) Entgegenhaltungen:
- DE-A- 3 204 055
- DE-A- 3 532 592
- DE-A- 4 234 036
- DE-A- 4 237 901
- DE-B- 2 310 193
- DE-U- 9 413 273

## Beschreibung

Die Erfindung betrifft eine elektrohydraulische Steuervorrichtung der im Oberbegriff des Patentanspruchs 1 angegebenen Art.

In einer Steuervorrichtung gemäß DE 42 37 901 A wird von der Anzapfung bei beiden Arbeitsendstellungen im Wegesteuerventil ein Steuerdruck abgeleitet, mit dem das Druckminderventil regelt und auf den der Druckschalter anspricht, um einer elektronischen Steuervorrichtung zu melden, daß der gewünschte Verbraucherdruck erreicht ist, oder kein Verbraucherdruck vorliegt. Innerhalb des Hubwegs des Kolbenschiebers wird die Steuerleitung über den Entlastungskanal zum Tank entlastet. Der Druckschalter stellt zuverlässig fest, ob das Wegesteuerventil ordnungsgemäß in seine Arbeitsendstellung verstellt wurde. Bei nicht ordnungsgemäß verstelltem Wegesteuerventil konnte zwar der Steuerdruck abgegriffen werden, jedoch erhielte trotzdem der Verbraucher nicht die erforderliche Druckmittelmenge bzw. würde der erforderliche Spanndruck zu langsam oder zu niedrig aufgebaut. Infolge des Durchfluß- oder Drosselwiderstands langer Leitungen kann der an der Anzapfung abgegriffene Steuerdruck den aktuellen, im Hydroverbraucher herrschenden Druck nicht mit ausreichender Sicherheit repräsentieren. Der Druckschalter gibt gegebenenfalls zu früh oder unrichtig ein Signal an die übergeordnete Steuereinrichtung.

In einer Steuervorrichtung gemäß DE 23 10 193 C wird aus jeder Verbraucherleitung ein Steuerdruck abgegriffen und über ein vorgespanntes Rückschlagventil dem Druckschalter des Druckminderventils zugeführt. An die Steuerleitung ist über eine Drossel eine Entlastungsleitung zum Tank angeschlossen. Es kann ohne Hilfsmittel nicht festgestellt werden, ob das Wegesteuerventil ordnungsgemäß verstellt wurde und den benötigten Durchgangsquerschnitt öffnet. Außerdem strömt in der Arbeitsendstellung des Wegesteuerventils permanent Steuerdruckmittel zum Tank ab.

In einer aus DE-U-94 13 273 beschriebenen Steuervorrichtung ist die an den Steueranschluß des Druckminderventils angeschlossene Steuerleitung direkt mit der Verbraucherdruckanzapfung des Wegesteuerventils verbunden.

Bei einer aus DE-A 42 34 036 bekannten Steuervorrichtung für einen Kran ist jeweils die Steuerleitung für einen Zulaufregler zu einem Richtungssteuerventil parallel über Wechselventile mit einer Regelvorrichtung für die Förderleistung der Pumpe verbunden.

Bei einem aus DE-B-23 10 193 bekannten Druckminderventil ist ein aufwendiger Regelkreis zur Sekundärdrucküberwachung des Druckminderventils vorgesehen.

In einer Steuervorrichtung gemäß DE 32 04 055 C ist die Steuerleitung zum Steueranschluß des Druckminderventils an ein Wechselventil zwischen beide Versorgungsleitungen angeschlossen. Es ist nicht ohne Hilfsmittel feststellbar, ob das Wegesteuerventil ordnungsgemäß in die Endstellung gestellt wurde. In der Praxis werden Wegemelder vorgesehen, um die Arbeitsendstellung des Wegesteuerventils festzustellen.

Der Erfindung liegt die Aufgabe zugrunde, eine elektrohydraulische Steuervorrichtung der eingangs genannten Art anzugeben, bei der unter Beibehalt des Vorteils der zuverlässigen Überwachung der Wegesteuerventilverstellung ohne zusätzliche Überwachungsorgane der Druckschalter das Druckminderventil den tatsächlichen Druckverhältnissen im Hydroverbraucher entsprechend betätigbar ist.

Die gestellte Aufgabe wird mit den Merkmalen des Patentanspruchs 1 gelöst.

Der Druckschalter liefert stets aussagefähige Signale für die übergeordnete Steuereinrichtung, weil er nicht nur auf einen die tatsächlichen Druckverhältnisse beim Hydroverbraucher repräsentierenden Steuerdruck anspricht, sondern die jeweilige Drucksituation nur dann für die übergeordnete Steuereinrichtung auswertet, wenn das Wegesteuerventil tatsächlich ausreichend weit zur Arbeitsendstellung verstellt ist. Dies wird ohne zusätzliche Überwachungseinrichtungen gewährleistet. Das Wegesteuerventil entlastet den Steuerdruck über den zweiten Steuerleitungszweig, bis es ordnungsgemäß verstellt ist, selbst, wenn im ersten Steuerleitungszweig bereits ausreichender Steuerdruck herrscht. Die Drossel verhindert, daß der Steuerdruck in der Steuerleitung bei nicht ordnungsgemäß verstelltem Wegesteuerventil herrscht. Erst nach ausreichender Verstellung des Wegesteuerventils, d.h. nach dem Trennen des zweiten Steuerleitungszweiges vom Tank, baut sich der Steuerdruck in der Steuerdruckleitung auf, der das Druckminderventil und/oder den Druckschalter betätigt. Eine Arbeitsendstellung ist eine Stellung des Wegesteuerventils, in der ein genügend großer Querschnitt für das Druckmittel geöffnet ist, durch den eine ausreichende Druckmittelmenge zum Hydroverbraucher gelangt, die dieser für eine eingestellte Geschwindigkeit und/oder einen bestimmten Spanndruck benötigt. Die Absperrung des zweiten Steuerleitungszweiges erfolgt nicht nur in der tatsächlichen Arbeitsendstellung, sondern in einem begrenzten Bereich um die Arbeitsendstellung. Der Steuerdruck repräsentiert die beim Verbraucher vorliegenden Druckverhältnisse, weil der erste Steuerleitungszweig an zumindest eine Verbraucherleitung angeschlossen ist. Dadurch wird ein verfälschender Einfluß der Drosselung bzw. des Strömungswiderstandes auch einer langen Verbraucherleitung eliminiert.

Gemäß Anspruch 2 verhindert die Drossel das Ansprechen des Druckschalters bzw. des Druckminderventils zum unrichtigen Zeitpunkt, und das Abströmen einer zu unzweckmäßigen Steuerdruckmittelmenge zum Tank.

Gemäß Anspruch 3 repräsentiert der Steuerdruck die tatsächlichen Druckverhältnisse beim Hydroverbraucher.

Gemäß Anspruch 4 werden in beiden Bewegungsrichtungen des Hydroverbrauchers der Druckschalter bzw. das Druckminderventil und das Wegesteuerventil überwacht. Das Wechselventil sperrt zur jeweils den niedrigeren Druck führenden Verbraucherleitung.

Bei Verbraucherleitungen mit für die Steuerfunktionen vernachlässigbarem Strömungswiderstand bzw. Drosselungseffekt kann gemäß Anspruch 5 der Anschluß des ersten Steuerleitungszweiges an die wenigstens eine Verbraucherleitung an jeder Stelle zwischen dem Hydroverbraucher und dem Wegesteuerventil liegen.

Gemäß Anspruch 6 hat der Drossel- oder Strömungswiderstand oftmals relativ dünner Schlauchabschnitte der Verbraucherleitungen keinen Einfluß auf das Ansprechen des Druckminderventils bzw. des Druckschalters. Dies ist für Werkzeugmaschinen wichtig, bei denen aus Platzgründen Schlauchabschnitte, insbesondere flexible Schlauchabschnitte, als Verbraucherleitungen verwendet werden.

Gemäß Anspruch 7 ist der Kolbenschieber des Wegesteuerventils baulich einfach und funktionssicher hubabhängig zwischen der Absperrung des Entlastungskanals oder dem Durchgang steuerbar. Es läßt sich konstruktiv einfach vorbestimmen, innerhalb welchen Bereiches des Hubwegs des Kolbenschiebers der Entlastungskanal offen oder abgesperrt ist. Zweckmäßigerweise wird für jede oder für die zu überwachende Arbeitsendstellung ein Toleranzmaß vorgegeben, innerhalb dessen der Entlastungskanal abgesperrt wird.

Gemäß Anspruch 8 ist das Toleranzmaß ein prozentueller Anteil des Hubwegs des Kolbenschiebers im Bereich der Arbeitsendstellung. Konstruktiv läßt sich das Toleranzmaß im Wegesteuerventil herstellungstechnisch einfach gemäß Anspruch 9 realisieren.

Ausführungsformen des Erfindungsgegenstandes werden anhand der Zeichnung erläutert. Es zeigen:
- Fig. 1: ein Blockschaltbild einer ersten Ausführungsform einer elektrohydraulischen Steuervorrichtung,
- Fig. 2A,B: korrespondierende Längsschnitte eines in Fig. 1 verwendeten Wegesteuerventils in einer Absperrstellung und in einer Arbeitsendstellung, und
- Fig.3,4,5: Detailvarianten der elektrohydraulischen Steuervorrichtung.

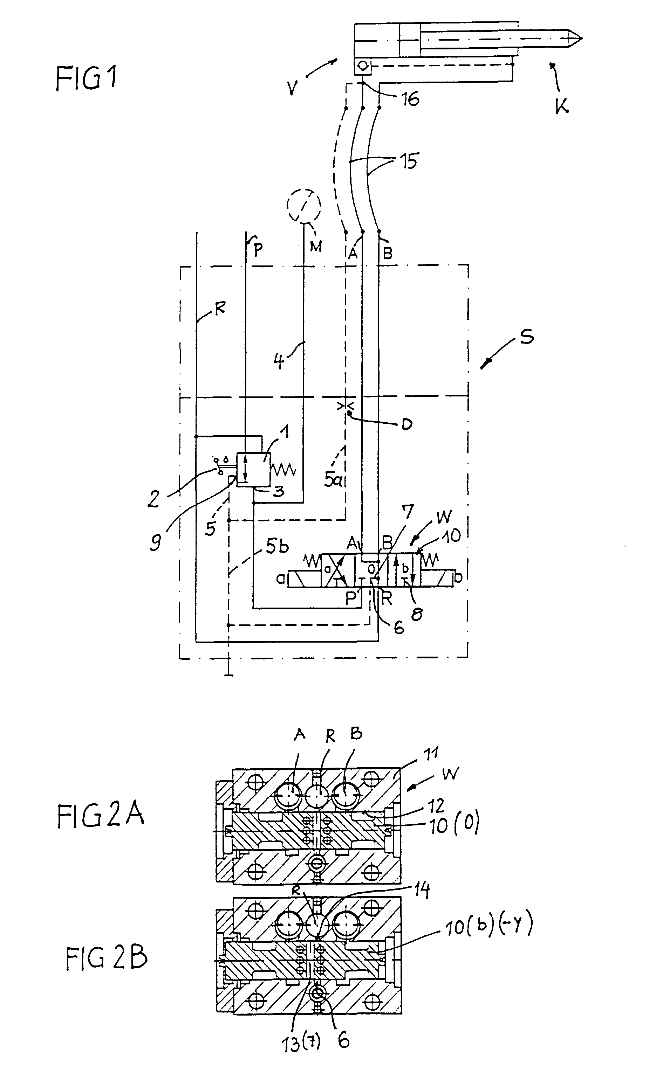

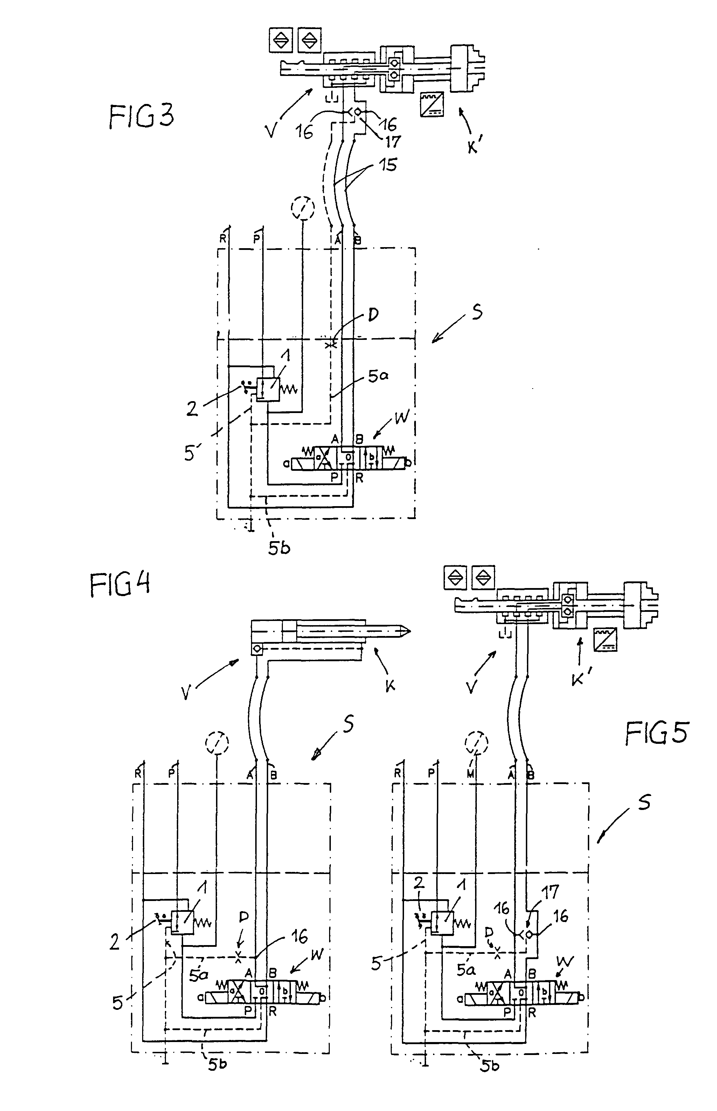

Eine elektrohydraulische Steuervorrichtung S gemäß Fig. 1 steuert die Bewegung eines Hydroverbrauchers V einer Werkzeugmaschinen-Komponente K, K', z.B. einer Reitstockpinole (Fig. 1 und 4), oder einer Spanneinrichtung (Fig. 3 und 5). Ein Druckminderventil 1 ist an eine Pumpenleitung P und eine Tankleitung R angeschlossen. Das Druckminderventil 1 weist einen Druckschalter 2, einen Ausgang 3 und einen Steuereingang 9 auf, ist einstellbar, und dient zum Einstellen eines vorbestimmten Drucks am Ausgang 3 in Abhängigkeit von einem Steuerdruck, der am Steuereingang 9 aufgenommen wird. Der Druckschalter 2 informiert eine übergeordnete, nicht gezeigte Steuereinrichtung darüber, ob der eingestellte Druck beim Hydroverbraucher V erreicht ist oder nicht. Ferner meldet der Druckschalter 2 der übergeordneten Steuereinrichtung indirekt, ob ein stromab des Druckminderventils 1 vorgesehenes Mehrstellungs-Wegesteuerventil W ordnungsgemäß in eine Arbeitsendstellung verstellt ist, oder nicht.

Stromab des Druckminderventils 1 führt eine Leitung 4 zu einem Manometer M. Die vom Ausgang 3 zum Wegesteuerventil W führende Leitung ist an einen Pumpenleitungs-Anschluß P angeschlossen. Die Tankleitung R führt zu einem Tankleitungsanschluß R des Wegesteuerventils. Vom Wegesteuerventil W führen Verbaucherleitungen A, B zu dem Hydroverbraucher V. Die Verbraucherleitungen A, B können Schlauchabschnitte 15 enthalten.

Beim Ausführungsbeispiel der Fig. 1 ist an die Verbraucherleitung A in einem Punkt 16 ein erster Steuerleitungszweig 5a einer zum Steuereingang 9 des Druckminderventils 1 (oder direkt zum Druckschalter 2) führenden Steuerleitung 5 angeschlossen, deren zweiter Steuerleitungszweig 5b zu einem Steueranschluß 6 am Wegesteuerventil W führt. Zwischen der Gabelung der Steuerleitung 5 in die beiden Steuerleitungszweige 5a und 5b und dem Punkt 16, oder im Punkt 16, ist eine Drossel D vorgesehen. Im Wegesteuerventil W ist ein Entlastungskanal 7 vorgesehen, über den der zweite Steuerleitungszweig 5b innerhalb eines bestimmten Verstellbereichs des Wegesteuerventils mit der Tankleitung R verbindbar ist. Bei 8 ist angedeutet, daß bei den Arbeitsendstellungen a, b des Wegesteuerventils die Verbindung vom Steueranschluß 6 zum Entlastungskanal 7 abgesperrt ist.

Das Wegesteuerventil W enthält einen Kolbenschieber 10, der aus der in Fig. 1 gezeigten Absperrstellung 0 in Arbeitsendstellungen a und b, z.B. mittels Stellmagneten, verstellbar ist. In der Absperrstellung 0 ist der Pumpenleitungs-Anschluß P von beiden Verbraucherleitungen A, B getrennt; die Verbraucherleitungen A, B sind mit der Tankleitung R verbunden. In der Arbeitsendstellung a (Rückholstellung für die Reitstockpinole) ist der Pumpenleitungs-Anschluß P des Wegesteuerventils über den Kolbenschieber 10 mit der Verbraucherleitung B verbunden, während die Verbraucherleitung A mit dem Tankleitungsanschluß R verbunden ist. In der Arbeitsendstellung b (Ausfahren der Reitstockpinole) ist der Pumpenleitungsanschluß P des Wegesteuerventils mit der Verbraucherleitung A verbunden, während die Verbraucherleitung B mit dem Tankleitungsanschluß R verbunden ist. Im jeweiligen Bereich der Arbeitsendstellungen a, b, d.h. nicht nur exakt in den Arbeitsendstellungen a, b, sondern auch innerhalb eines Toleranzmaßes Y (Fig. 2B) bei den Arbeitsendstellungen a, b, ist der Steueranschluß 6 vom Entlastungskanal 7 getrennt. Über den verbleibenden Hubweg des Kolbenschiebers 10 ist hingegen der Steueranschluß 6 über den Entlastungskanal 7 mit dem Tank R verbunden. Anstelle eines Wegesteuerventils W mit drei Stellungen könnte auch ein Wegesteuerventil mit nur zwei Endstellungen ohne Absperrstellung verwendet werden.

In Fig. 1 wird der Steuerdruck nur aus der Verbraucherleitung A abgegriffen. Das Druckminderventil 1 regelt den Druck am Ausgang 3 nur bei beaufschlagter Versorgungsleitung A. Auch der Druckschalter 2 meldet nur dann die Druckverhältnisse (z.B.Erreichen des Verfahrdrucks der Reitstockpinole bzw. den Abfall des Spanndrucks unter einen Sollwert) in der Verbraucherleitung A. Bei Beaufschlagung der Versorgungsleitung B regelt das Druckminderventil den Druck nicht, so daß die Reitstockpinole K unter Ausnutzen des vollen Pumpendruckes verfahren wird.

Die Bewegungsgeschwindigkeit des Hydroverbrauchers V bzw. der Spanndruck wird am Druckminderventil 1 eingestellt. Das Wegesteuerventil W befindet sich in der Absperrstellung 0; die Reitstockpinole ist in einer zurückgezogenen Stellung.

Von der übergeordneten Steuereinrichtung wird der Befehl abgegeben, das Wegesteuerventil W zur Arbeitsendstellung b zu verstellen. Das Druckminderventil 1 ist geöffnet, bis in der Verbraucherleitung A beim Hydroverbraucher V der Druck steigt und über den ersten Steuerleitungszweig 5a an den Steuereingang 9 des Druckminderventils 1 und über den zweiten Steuerleitungszweig 5b an den Steueranschluß 6 des Wegesteuerventils übertragen wird. Mit dem Steuerdruck regelt das Druckminderventil 1 den Druck in seinem Ausgang 3 auf die voreingestellte Druckhöhe. Nur unter der Voraussetzung, daß das Wegesteuerventil ordnungsgemäß bei oder in der Arbeitsendstellung b ist, kann der Steuerdruck überhaupt am Steuereingang 9 wirksam werden. Hat das Wegesteuerventil seine Arbeitsendstellung b nicht ordnungsgemäß erreicht, dann strömt über den Entlastungskanal 7 Steuerdruckmittel zum Tank. Das Druckminderventil 1 regelt nicht, der Druckschalter 2 spricht nicht an. Solange dies nicht der Fall ist, wird von der übergeordneten Steuereinrichtung in der Werkzeugmaschine kein Arbeitsvorgang eingeleitet. Ist hingegen das Wegesteuerventil W ordnungsgemäß zur Arbeitsendstellung b (oder in den auf das Toleranzmaß Y gespreizten Bereich) verstellt, dann wird der Steuerdruck im Steuereingang 9 wirksam; der Druckschalter 2 spricht an und meldet "Verbraucherdruck erreicht bzw. Spanndruck vorhanden". Die übergeordnete Steuereinrichtung veranlaßt einen Arbeitsschritt in der Werkzeugmaschine. Nach Abschluß des oder der Arbeitsschritte verstellt die übergeordnete Steuereinrichtung das Wegesteuerventil zur anderen Arbeitsendstellung a. Die Reitstockpinole fährt zurück und wird, z.B., an geeigneter Stelle durch Verstellen des Wegesteuerventils W in die Absperrstellung 0 angehalten. Über den zweiten Steuerleitungszweig 5b baut sich der Steuerdruck zum Tank R ab. Der Druckschalter meldet "Spanndruck nicht mehr vorhanden". Die Drossel D im ersten Steuerungsleitungszweig 5a ist so bemessen, daß sie höchstens so viel Steuerdruckmittel passieren läßt, wie bei freigegebenem Entlastungskanal 7 zum Tank R abströmt.

Ein Teilbereich des Wegesteuerventils W der Fig. 1 ist in den Fig. 2A, 2B jeweils in einem Längsschnitt gezeigt. Fig. 2A verdeutlicht die Absperrstellung 0 des Kolbenschiebers 10 im Wegesteuerventil W, der in einer Bohrung 12 eines Gehäuses 11 abgedichtet verschieblich geführt ist.

In Fig. 2B hat der Kolbenschieber 10 die Arbeitsendstellung b erreicht, in der er die Verbindung vom nicht gezeigten Pumpenleitungsanschluß P zur Verbraucherleitung A in ausreichendem Maß geöffnet hat und die Verbraucherleitung B mit der Tankleitung verbindet.

Im Gehäuse 11 mündet in etwa mittig der Steueranschlußkanal 6 in die Bohrung 12, dessen Mündung der Mündung eines Ablaßkanals 14 zum Tankleitungsanschluß R diametral gegenüberliegt. In der Absperrstellung 0 gemäß Fig. 2A fluchtet ein diametraler Durchgang 13 des Kolbenschiebers 10 mit den beiden Mündungen. Der Durchang 13 definiert den Entlastungskanal 7, der in Fig. 1 angedeutet ist. Der Mündungsdurchmesser des Durchgangs 13 ist geringfügig größer als der Mündungsdurchmesser des Steueranschlußkanals 6. Der Mündungsdurchmesser der Ablaßleitung 14 ist geringfügig kleiner als der Mündungsdurchmesser des Steueranschlußkanals 6. Durch diese Ausgestaltung wird erreicht, daß in jeder Stellrichtung des Kolbenschiebers 10 der Steueranschlußkanal 6 mit dem Tankleitungsanschluß R bis knapp vor Erreichen der Arbeitsendstellung a oder b verbunden ist, und daß der Steueranschlußkanal 6 im Bereich Arbeitsendstellung vom Tankleitungsanschluß R getrennt ist. Mit "Bereich der Arbeitsendstellung" ist gemeint, daß der Steueranschlußkanal 6 bereits abgesperrt ist, wenn sich der Kolbenschieber 10 um ein Toleranzmaß Y vor der eigentlichen Arbeitsendstellung, z.B. b in Fig. 2B, befindet. Das Toleranzmaß Y ist so bemessen, daß bereits ein zur Versorgung des Hydroverbrauchers V ausreichender Durchgangsquerschnitt offen ist. Das Toleranzmaß Y sollte ca. 8 bis 30%, vorzugsweise etwa 20% des Hubwegs des Kolbenschiebers aus der Absperrstellung 0 in die Arbeitsendstellung a oder b betragen. Bei der gezeigten Ausführungsform gemäß Fig. 2A führt der Kolbenschieber 10 aus der Absperrstellung 0 einen Hubweg von ca. 2,5 mm bis in die Arbeitsendstellung b aus. Der Steueranschlußkanal 6 ist über die letzten 0,5 mm des Hubwegs vom Tankleitungsanschluß R abgesperrt.

In Fig. 3 ist die Werkzeugmaschinen-Komponente K' eine Spanneinrichtung mit einem hydraulisch verstellbaren Spannkolben. Der Druck der Spanneinrichtung wird in beiden Bewegungsrichtungen des Spannkolbens überwacht. Aus diesem Grund ist der erste Steuerleitungszweig 5a über ein Wechselventil 17 bei 16 an beide Verbraucherleitungen A, B angeschlossen. Von dem Wechselventil 17 erhält der erste Steuerleitungszweig 5a den Steuerdruck aus der Verbraucherleitung mit dem höheren Druck. Der weitere Aufbau der hydraulischen Steuervorrichtung in Fig. 1 entspricht dem von Fig. 1. Abgesehen davon, daß die Druckverhältnisse im Hydroverbraucher V in beiden Bewegungsrichtungen überwacht werden und das Druckminderventil 1 für beide Bewegungsrichtungen regelt bzw. der Druckschalter 2 auf den Steuerdruck aus beiden Verbraucherleitungen A, B anspricht, ist die Funktion wie in Fig. 1.

In Fig. 4 ist (ähnlich wie in Fig. 1) der Hydroverbraucher V ein Hydraulikzylinder einer Reitstockpinole als Werkzeugmaschinenkomponente K. Der Steuerdruck für die Steuerleitung 5 wird nur aus der Verbraucherleitung A abgeleitet. Der Punkt 16, in dem der erste Steuerleitungszweig 5a mit der Drossel D an die Verbraucherleitung A angeschlossen ist, befindet sich zwischen dem Wegesteuerventil W und dem Hydroverbraucher. Die Funktion entspricht der anhand von Fig. 1 erläuterten.

In Fig. 5 dient die Steuervorrichtung S analog zu Fig. 3 zum Steuern einer Spanneinrichtung als Komponente K' einer Werkzeugmaschine, die in beiden Bewegungsrichtungen drucküberwacht wird. Deshalb ist der erste Steuerleitungszweig 5a, in dem die Drossel D angeordnet ist, über das Wechselventil 17 mit den Punkten 16 der beiden Versorgungsleitungen A, B wechselseitig verbindbar. Die Punkte 16 liegen bei dieser Ausführungsform näher beim Wegesteuerventil W als in Fig. 3. Die Funktion entspricht der von Fig. 3.

Der erste Steuerleitungszweig 5a könnte auch direkt an den Hydroverbraucher angeschlossen sein, um die Druckverhältnisse noch genauer abzutasten. Bei allen Ausführungsformen könnte - wie gesagt - auch ein Wegesteuerventil mit nur zwei Arbeitsendstellungen ohne Absperrstellung verwendet werden. Denkbar ist auch die Verwendung eines Wegesteuerventils mit mehr als drei Stellungen. Ferner ist es möglich, das Druckminderventil 1 aus dem zwischen dem Ausgang 3 und dem Pumpenleitungs-Anschluß P verlaufenden Abschnitt der Pumpenleitung P zu steuern, und den Steuerdruck in der Steuerleitung 5 zum Betätigen des Druckschalters 2 zu verwenden.

## Patentansprüche

1. Elektrohydraulische Steuervorrichtung (S) für einen Hydroverbraucher (V) einer Werkzeugmaschinen-Komponente (K, K'), insbesondere einer Reitstockpinole oder einer Spanneinrichtung, mit einem an eine Druckquelle und (P) einen Tank (R) angeschlossenen, einen auf den Druckwert eines Steuerdrucks ansprechenden, elektrischen Druckschalter (2), einen Ausgang (3) und einen Steuereingang (9) aufweisenden Druckminderventil (1), dessen Ausgang (3) über ein Mehrstellungs-Wegesteuerventil (W) wechselweise mit einer von zwei Verbraucherleitungen (A, B) verbindbar ist, und dessen Steuereingang (9) mit dem vom Druck in zumindest einer Verbraucherleitung (A oder B) abgeleiteten Steuerdruck aus einer Steuerleitung (5) beaufschlagbar ist, die an das Wegesteuerventil (W) angeschlossen ist, wobei die Steuerleitung (5) im Wegesteuerventil (W) in dessen die jeweilige Verbraucherleitung (A oder B) ordnungsgemäß mit dem Ausgang (3) des Druckminderventils (1) verbindenden Arbeitsendstellungen (a oder b) vom Tank getrennt und innerhalb des Verstellbereichs zwischen diesen Stellungen (a und b) über einen Entlastungkanal (7) mit dem Tank verbunden ist, **dadurch gekennzeichnet, daß** die an den Steuereingang (9) des Druckminderventils (1) angeschlossene Steuerleitung (5) aufgezweigt ist in einen ersten zu wenigstens einer Verbraucherleitung (A, B) oder dem Hydroverbraucher (V) führenden Steuerleitungszweig (5a) und einen zweiten, an das Wegesteuerventil (W) angeschlossenen Steuerleitungszweig (5b), und daß im ersten Steuerleitungszweig (5a) eine Drossel (D) angeordnet ist.

2. Elektrohydraulische Steuervorrichtung nach Anspruch 1, **dadurch gekennzeichnet, daß** die Drossel (D) einen Durchgangsquerschnitt aufweist, der höchstens dem Durchgangsquerschnitt des Entlastungskanals (7) im Wegesteuerventil (W) bzw. des zweiten Steuerleitungszweigs (5b) entspricht.

3. Elektrohydraulische Steuervorrichtung nach Anspruch 1, **dadurch gekennzeichnet, daß** das Wegesteuerventil (W) im Abstand vom Hydroverbraucher (V) angeordnet ist, und daß der erste Steuerleitungszweig (5a) näher beim Hydroverbraucher (V) an wenigstens eine Verbraucherleitung (A, B) angeschlossen ist.

4. Elektrohydraulische Steuervorrichtung nach Anspruch 1, **dadurch gekennzeichnet, daß** der erste Steuerleitungszweig (5a) über ein Wechselventil (17) an beide Verbraucherleitungen (A, B) angeschlossen ist.

5. Elektrohydraulische Steuervorrichtung nach Anspruch 1, **dadurch gekennzeichnet, daß** der erste Steuerleitungszweig (5a) zwischen dem Wegesteuerventil (W) und dem Hydroverbraucher (V) näher beim Wegesteuerventil (W) an wenigstens eine Verbraucherleitung (A, B) angeschlossen ist.

6. Elektrohydraulische Steuervorrichtung nach wenigstens einem der Ansprüche 1 bis 4, **dadurch gekennzeichnet, daß** die Verbraucherleitungen (A, B) zumindest zum Teil flexible Schlauchabschnitte (15) aufweisen, und daß der erste Steuerleitungszweig (5a) nahe dem dem Hydroverbraucher (V) befindlichen Ende des Schlauchabschnitts (15) der jeweiligen Verbraucherleitung (A, B) an diese angeschlossen ist.

7. Elektrohydraulische Steuervorrichtung nach Anspruch 1, **dadurch gekennzeichnet, daß** das Wegesteuerventil (W) in einer Bohrung (12) eines Gehäuses (11) einen zwischen einer Absperrstellung 0, in der beide Verbraucherleitungen (A, B) vom Druckminderventil (1) getrennt und mit dem Tank (R) verbunden sind, und zwei Arbeitsendstellungen (a, b), in denen jeweils eine der Verbraucherleitungen (A oder B) mit dem Druckminderventil (1) und die andere mit dem Tank (R) verbunden ist, verstellbaren Kolbenschieber (10) aufweist, daß der Kolbenschieber (10) einen diametralen, den Entlastungskanal (7) bildenden Durchgang (13) aufweist, daß im Gehäuse (11) auf den Durchgang (13) ausgerichtet ein Anschlußkanal (6) für den zweiten Steuerleitungszweig (5b) und ein in der Bohrung (12) dem Anschlußkanal (6) diametral gegenüberliegender Ablaßkanal (14) zum Tank (R) derart ausgebildet sind, daß der Kolbenschieber (10) den Anschlußkanal (6) zumindest in den beiden Arbeitsendstellungen (a, b), vorzugsweise bereits ein vorbestimmtes Toleranzmaß (Y) vor Erreichen der beiden Arbeitsendstellungen (a, b), vom Ablaßkanal (14) trennt, und innerhalb des Hubwegs bis in eine Arbeitsendstellung (a, b), vorzugsweise abzüglich des Toleranzmaßes (Y), den Anschlußkanal (6) über den Durchgang (13) mit dem Ablaßkanal (14) verbindet.

8. Elektrohydraulische Steuervorrichtung nach Anspruch 7, **dadurch gekennzeichnet, daß** das Toleranzmaß ca. 8 bis 30%, vorzugsweise etwa 20%, des Hubwegs des Kolbenschiebers (10) aus der Absperrstellung 0 in die jeweilige Arbeitsendstellung (a oder b) beträgt.

9. Elektrohydraulische Steuervorrichtung nach Anspruch 7, **dadurch gekennzeichnet, daß** die Achsen des Anschlußkanals (6), des Durchganges (13) und des Ablaßkanals (14) in der Absperrstellung 0 fluchten, und daß der Durchmesser der Mündung des Anschlußkanals (6) in die Bohrung (12) geringfügig kleiner als der Durchmesser des Durchgangs (13) an der Kolbenschieber-Oberfläche, jedoch größer als die Mündung des Ablaßkanals (14) in der Bohrung (12) ist.

## Claims

1. Electrohydraulic control device (S) for a hydraulic consumer (V) of a machine tool component (K, K'), in particular of a tailstock sleeve or of a clamping device, having an electric pressure switch (2) which is connected to a pressure source (P) and to a tank (R) and responds to the pressure value of a control pressure, and having a pressure-reducing valve (1) which has an output (3) and a control input (9), the output (3) of which can be connected via a multi-position directional control valve (W) alternately to one of two consumer lines (A, B), and the control input (9) of which can be acted upon by the control pressure, which is derived from the pressure in at least one consumer line (A or B), from a control line (5) which is connected to the directional control valve (W), the control line (5) being separated in the directional control valve (W), in its working end positions (a or b) connecting the particular consumer line (A or B) correctly to the output (3) of the pressure-reducing valve (1), from the tank and being connected within the adjusting region between these positions (a and b) to the tank via a relief duct (7), **characterized in that** the control line (5), which is connected to the control input (9) of the pressure-reducing valve (1), is branched into a first control line branch (5a), which leads to at least one consumer line (A, B) or to the hydraulic consumer (V), and into a second control line branch (5b) connected to the directional control valve (W), and **in that** a restrictor (D) is arranged in the first control line branch (5a).

2. Electrohydraulic control device according to Claim 1, **characterized in that** the restrictor (D) has a passage cross section which corresponds at maximum to the passage cross section of the relief duct (7) in the directional control valve (W) or of the second control line branch (5b).

3. Electrohydraulic control device according to Claim 1, **characterized in that** the directional control valve (W) is arranged at a distance from the hydraulic consumer (V), and **in that** the first control line branch (5a) is connected to at least one consumer line (A, B) closer to the hydraulic consumer (V).

4. Electrohydraulic control device according to Claim 1, **characterized in that** the first control line branch (5a) is connected to both consumer lines (A, B) via a shuttle valve (17).

5. Electrohydraulic control device according to Claim 1, **characterized in that** the first control line branch (5a) is connected between the directional control valve (W) and the hydraulic consumer (V), closer to the directional control valve (W), to at least one consumer line (A, B).

6. Electrohydraulic control device according to at least one of Claims 1 to 4, **characterized in that** the consumer lines (A, B) have flexible hose sections (15) at least in part, and **in that** the first control line branch (5a) is connected to the respective consumer line (A, B) in the vicinity of that end of the hose section (15) of the said consumer line (A, B) which is situated in the hydraulic consumer (V).

7. Electrohydraulic control device according to Claim 1, **characterized in that** the directional control valve (W) has, in a hole (12) in a housing (11), a piston valve (10) which can be adjusted between a shut-off position 0, in which both consumer lines (A, B) are separated from the pressure-reducing valve (1) and are connected to the tank (R), and two working end positions (a, b) in which in each case one of the consumer lines (A or B) is connected to the pressure-reducing valve (1) and the other is connected to the tank (R), **in that** the piston valve (10) has a diametrical passage (13) forming the relief duct (7), **in that** a connecting duct (6) for the second control line branch (5b) is formed in the housing (11) aligned with the passage (13) and an outlet duct (14) to the tank (R) is formed in the hole (12) lying diametrically opposite the connecting duct (6), in such a manner that the piston valve (10) separates the connecting duct (6) from the outlet duct (14) at least in the two working end positions (a, b), preferably already at a predetermined degree of tolerance (Y) before the two working end positions (a, b) are reached, and within the stroke travel as far as a working end position (a, b), preferably minus the degree of tolerance (Y), connects the connecting duct (6) via the passage (13) to the outlet duct (14).

8. Electrohydraulic control device according to Claim 7, **characterized in that** the degree of tolerance is approximately 8 to 30%, preferably approximately 20%, of the stroke travel of the piston valve (10) from the shut-off position 0 into the respective working end position (a or b).

9. Electrohydraulic control device according to Claim 7, **characterized in that** the axes of the connecting duct (6), of the passage (13) and of the outlet duct (14) are aligned in the shut-off position 0, and **in that** the diameter of the opening of the connecting duct (6) into the hole (12) is slightly smaller than the diameter of the passage (13) on the piston-valve surface, but is larger than the opening of the outlet duct (14) in the hole (12).

## Revendications

1. Dispositif de commande électro-hydraulique (S) pour un consommateur hydraulique (V) d'un composant (K, K') de machine-outil, en particulier d'un canon de contrepointe ou d'un dispositif de bridage, comportant un manocontacteur électrique (2) raccordé à une source de pression (P) et à un réservoir (R) et répondant à la valeur de pression d'une pression de commande, une vanne de détente (1) comportant une sortie (3) et une entrée de commande (9), dont la sortie (3) peut être reliée alternativement à l'une de deux lignes de consommateur (A, B), et dont l'entrée de commande (9) peut recevoir la pression de commande, dérivée de la pression dans au moins une ligne de consommateur (A ou B), provenant d'une ligne de commande (5), qui est raccordée à la vanne de distribution (W), la ligne de commande (5) dans la vanne de distribution (W) étant séparée du réservoir dans ses positions de travail extrêmes (a ou b) reliant respectivement la ligne de consommateur (A ou B) dans les règles de l'art avec la sortie (3) de la vanne de détente (1) et étant reliée au réservoir par l'intermédiaire d'un canal de décharge (7) à l'intérieur de la zone de déplacement entre ces positions (a et b), **caractérisé en ce que** la ligne de commande (5) raccordée à l'entrée de commande (9) de la vanne de détente (1) est ramifiée en une première branche de ligne de commande (5a) menant à au moins une ligne de consommateur (A, B) ou au consommateur hydraulique (V) et en une seconde branche de ligne de commande (5b) raccordée à la vanne de distribution (W), et **en ce qu'**un papillon (D) est disposé dans la première branche de ligne de commande (5a).

2. Dispositif de commande électro-hydraulique selon la revendication 1, **caractérisé en ce que** le papillon (D) présente une section transversale de passage qui correspond au maximum à la section transversale de passage du canal de décharge (7) dans la vanne de distribution (W) ou de la seconde branche de ligne de commande (5b).

3. Dispositif de commande électro-hydraulique selon la revendication 1, **caractérisé en ce que** la vanne de distribution (W) est disposée à distance du consommateur hydraulique (V), et **en ce que** la première branche de ligne de commande (5a) est raccordée plus proche du consommateur hydraulique (V) à au moins une ligne de consommateur (A, B).

4. Dispositif de commande électro-hydraulique selon la revendication 1, **caractérisé en ce que** la première branche de ligne de commande (5a) est raccordée par l'intermédiaire d'une vanne à deux voies (17) aux deux lignes de consommateur (A, B).

5. Dispositif de commande électro-hydraulique selon la revendication 1, **caractérisé en ce que** la première branche de ligne de commande (5a) est raccordée entre la vanne de distribution (W) et le consommateur hydraulique (V), plus proche de la vanne de distribution (W), à au moins une ligne de consommateur (A, B).

6. Dispositif de commande électro-hydraulique selon au moins l'une des revendications 1 à 4, **caractérisé en ce que** les lignes de consommateur (A, B) présentent des sections de tuyau (15) au moins partiellement flexibles, et **en ce que** la première branche de ligne de commande (5a) située à proximité de l'extrémité de la section de tuyau (15) de la ligne de consommateur (A, B) considérée à côté du consommateur hydraulique (V), est raccordée à celle-ci.

7. Dispositif de commande électro-hydraulique selon la revendication 1, **caractérisé en ce que** la vanne de distribution (W) dans un alésage (12) d'un carter (11) présente un robinet à piston (10) capable de déplacement entre une position d'arrêt 0, dans laquelle les deux lignes de consommateur (A, B) sont séparées de la vanne de détente (1) et reliées au réservoir (R) et deux positions de travail extrêmes (a, b) dans lesquelles respectivement l'une des lignes de consommateur (A ou B) est reliée avec la vanne de détente (1) et l'autre avec le réservoir (R), **en ce que** le robinet à piston présente un passage (13) diamétral formant le canal de décharge (7), **en ce que** dans le carter (11) orienté sur le passage (13) un canal de raccordement (6) pour la seconde branche de ligne de commande (5b) et un canal d'évacuation (14) vers le réservoir (R) diamétralement opposé au canal de raccordement (6) dans l'alésage (12) sont conçus de manière telle que le robinet à piston (10) sépare du canal d'évacuation le canal de raccordement (6) au moins dans les deux positions de travail extrêmes (a, b), de préférence dès une tolérance (Y) prédéfinie avant que soient atteintes les deux positions de travail extrêmes, et relie le canal de raccordement (6) au canal d'évacuation (14) par l'intermédiaire du passage (13) à l'intérieur de la course jusqu'à une position de travail extrême (a, b), de préférence la tolérance (Y) déduite.

8. Dispositif de commande électro-hydraulique selon la revendication 7, **caractérisé en ce que** la tolérance est d'environ 8 à 30 %, de préférence sensiblement égale à 20 %, de la course du robinet à piston (10) de la position d'arrêt 0 dans la position de travail extrême (a ou b) considérée.

9. Dispositif de commande électro-hydraulique selon la revendication 7, **caractérisé en ce que** dans la position d'arrêt 0, les axes du canal de raccordement (6), du passage (13) et du canal d'évacuation (14) coïncident, et **en ce que** le diamètre de l'embouchure du canal de raccordement (6) dans l'alésage (12) est légèrement inférieur au diamètre du passage (13) à la surface du robinet à piston, toutefois supérieur à l'embouchure du canal d'évacuation (14) dans l'alésage (12).
